# EUROPÄISCHE PATENTSCHRIFT

(11) **EP 1 525 519 B1**
(45) Veröffentlichungstag und Bekanntmachung des Hinweises auf die Patenterteilung: **02.12.2009**
(21) Anmeldenummer: 03783938.8
(22) Anmeldetag: 29.07.2003
(51) Int. Cl.: G05B 19/418

(54) **VERFAHREN ZUR AUTOMATISIERTEN STEUERUNG EINER TECHNISCHEN ANLAGE UND PROZESSLEITSYSTEM ZUR DURCHFÜHRUNG DES VERFAHRENS**
METHOD FOR THE AUTOMATED CONTROL OF A TECHNICAL INSTALLATION AND PROCESS CONTROL SYSTEM FOR CARRYING OUT SAID METHOD
PROCEDE DE COMMANDE AUTOMATIQUE D'UNE INSTALLATION TECHNIQUE ET SYSTEME DE CONDUITE DE PROCESSUS DESTINE A L'EXECUTION DU PROCEDE

(30) Priorität: 29.07.2002 DE 10234467
(43) Veröffentlichungstag der Anmeldung: 27.04.2005
(73) Patentinhaber: SIEMENS AKTIENGESELLSCHAFT, 80333 München (DE)
(72) Erfinder: GLAS, Karl, 91074 Herzogenaurach (DE); KRÖNER, Jürgen, 75196 Remchingen-Singen (DE); REBELLIUS, Matthias, 8706 Meilen (CH); SINN, Ulrich, Erlangen 91056 (DE)
(86) Internationale Anmeldenummer: PCT/DE2003/002549
(87) Internationale Veröffentlichungsnummer: WO 2004/015508

(56) Entgegenhaltungen:
- EP-A- 0 654 721
- EP-A- 0 825 506
- EP-A- 1 128 244
- DE-A- 19 946 441

## Beschreibung

Die Erfindung bezieht sich auf ein Verfahren zur automatisierten Steuerung einer technischen Anlage mit einer Mehrzahl von zur Abwicklung von Prozessschritten datenseitig miteinander verschalteten Anlagenkomponenten, denen von einer zentralen Steuereinrichtung unter Berücksichtigung von dort eingehenden Prozessführungssignalen erzeugte Stellbefehle zugeführt werden, wobei in einer mobilen Bedieneinheit erzeugte Prozessführungssignale drahtlos an Schnittstellen übertragen und von diesen an die zentrale Steuereinrichtung weitergeleitet werden. Sie betrifft weiter ein zur Durchführung des Verfahrens geeignetes Prozessleitsystem für eine technische Anlage.

In zur Durchführung vergleichsweise komplexer technologischer Prozesse vorgesehenen technischen Anlagen kann ein aufeinander abgestimmtes Zusammenwirken einer Vielzahl von Anlagenkomponenten erforderlich sein. Zur automatisierten Prozessführung oder -steuerung ist einer technischen Anlage mit mehreren Anlagenkomponenten üblicherweise ein Prozessleitsystem oder Automatisierungssystem zugeordnet, in dem von einer üblicherweise zentralisierten Kontroll- oder Steuereinrichtung aus Stellbefehle für die einzelnen Anlagenkomponenten ausgegeben werden. Die zentrale Steuereinrichtung stellt dabei sicher, dass die Funktionsweise und der jeweilige Betriebsstatus jeder Anlagenkomponente im Hinblick auf den vorgegebenen Prozessablauf der Gesamtanlage geeignet auf die jeweils anderen Anlagenkomponenten abgestimmt ist. Die zentrale Steuereinrichtung ist dabei üblicherweise eingangsseitig mit einer Vielzahl von Sensoren zur Erfassung des jeweiligen Betriebszustandes der einzelnen Anlagenkomponenten und ausgangsseitig zur Übermittlung der Stellbefehle auf geeignete Weise mit den Anlagenkomponenten verbunden.

Eine automatische Fertigungsanlage mit mehreren Fertigungsstationen und einem Informationsflusssystem mit zentraler Steuereinheit ist beispielsweise aus der EP 0 654 721 A1 bekannt.

Um dem Bedienpersonal die Möglichkeit zum Eingriff in den Prozessablauf der technischen Anlage zu geben, beispielsweise um den eigentlichen Prozessablauf im Hinblick auf möglicherweise variierende Prozessziele geeignet zu steuern oder auch um im Hinblick auf vorgegebene Sicherheitserfordernisse Zustandskontrollen oder Noteingriffe zu ermöglichen, ist die der jeweiligen technischen Anlage zugeordnete zentrale Steuereinrichtung darüber hinaus eingangsseitig üblicherweise mit Kontroll- oder Bedieneinheiten verbunden, über die das Bedienpersonal zur Steuerung des Prozesses geeignete Bedienbefehle eingeben kann. Die jeweilige Bedieneinheit kann dabei prozessorgeführt sein und beispielsweise in Form eines Personalcomputers (PC) oder einer Leitwarte räumlich fest installiert sein.

Gerade bei moderneren Konzepten zur automatisierten Prozessführung kann es jedoch wünschenswert sein, dem Bedienpersonal ortsungebunden geeignete Zugriffsmöglichkeiten zur Beeinflussung des Prozessablaufs zur Verfügung zu stellen. Dazu können die Bedieneinheiten oder zumindest ein Teil der Bedieneinheiten als ortsungebundene, mobile Bedieneinheiten ausgeführt sein, die über eine drahtlose Verbindung, beispielsweise eine Funkverbindung, zur Weitergabe von Prozessführungssignalen mit der zentralen Steuereinrichtung kommunizieren. Dabei kann im Rahmen der drahtlosen Vernetzungstechnik, wie sie beispielsweise mit so genannten Wireless LAN (WLAN) realisiert sein kann, eine drahtlose Anbindung von so genannten Panels, Laptops oder Webpads als mobile Bedieneinheiten an die zentrale Steuereinrichtung vorgesehen sein.

Zusätzlich zu den bei der Erzeugung von Stellbefehlen berücksichtigten Prozessführungssignalen kann dabei auch eine drahtlose Übertragung anderer Kommunikationsparameter wie beispielsweise von Diagnoseparametern vorgesehen sein, die auch von der zentralen Steuereinrichtung aus zur jeweiligen mobilen Bedieneinheit hin erfolgen kann.

Eine derartige Ausgestaltung eines Automatisierungs- oder Prozessleitsystems ermöglicht aufgrund der Ortsungebundenheit der Regelung, Steuerung, Diagnose oder Visualisierung einzelner Prozessschritte oder -zustände eine besonders hohe Flexibilität bei der Prozessführung der technischen Anlage.

Allerdings bedingt die für das Bedienpersonal erreichbare Ortsungebundenheit bei den Eingriffsmöglichkeiten in die Prozessabläufe der technischen Anlage die Gefahr, dass der Bediener sich von der im jeweiligen Prozesszustand gerade zu bedienenden Anlagenkomponente oder dem Maschinenteil räumlich vergleichsweise weit entfernt, so dass eine unmittelbare Einsichtnahme der zu bedienenden Anlagenkomponente beim Eingriff in den Prozessablauf nicht unbedingt gewährleistet ist. Bei möglicherweise auftretenden Fehlbedienungen oder auch bei zunächst nur unmittelbar an der jeweiligen Anlagenkomponente wahrnehmbaren Änderungen im Prozesszustand könnte daher aufgrund des fehlenden direkten optischen Kontakts eine insgesamt der Anlagensituation nicht angemessene Reaktion durch das Bedienpersonal erfolgen. Darüber hinaus kann auch eine zu große räumliche Entfernung der jeweiligen mobilen Bedieneinheit zur aktuell genutzten Schnittstelle eine Beeinträchtigung der Übertragungsqualität bedingen, die ihrerseits zu Übertragungsfehlern und somit zu Prozessfehlern führen kann.

Um dieses Problem zu vermeiden und ein besonders hohes Maß an betrieblicher Sicherheit durch eine ordnungsgemäße und situationsangepasste Bedienung des Automatisierungssystems der technischen Anlage zu gewährleisten, ist es wünschenswert, die Freigabe des Zugriffs von einer mobilen Bedieneinheit aus auf einzelne Anlagenkomponenten geeignet zu beschränken. Zu diesem Zweck ist es aus der DE 101 107 76 A1 bekannt, bei der Verwendung von mobilen Bedieneinheiten vor der Freigabe eines Bedieneingriffs in den Prozessablauf einer Anlagenkomponente zunächst eine Zuordnung der jeweiligen mobilen Bedieneinheit zur zu bedienenden Anlagenkomponente vorzunehmen. Erst wenn die Anlagenkomponente, bei der ein Eingriff in den Prozessablauf erfolgen soll, ordnungsgemäß zur gerade verwendeten mobilen Bedieneinheit zugeordnet ist, erfolgt eine Freigabe für den jeweiligen Prozesseingriff. Weiterhin ist es aus dem Artikel "Die Kombilösung", Computer & Automation, Heft 01/2002, Seite 44-47, Verfasser Günter Herkommer bekannt, Prozesseingriffe in die Abläufe einer technischen Anlage von mobilen Bedieneinheiten aus in Abhängigkeit vom aktuellen Standort des Bedieners in Relation zu den Anlagenkomponenten freizugeben. Bei beiden bekannten Systemen erfolgt die Erkennung des Standorts des Bedieners über ein eigens dafür vorgesehenes Ortungssystem, das insbesondere zur Vermeidung von Beeinträchtigungen anderer Funktionsabläufe beispielsweise auf Infrarotbasis aufgebaut sein kann. Die genannten Automatisierungs- oder Prozessleitsysteme sind somit jedoch vergleichsweise aufwändig.

Der Erfindung liegt daher die Aufgabe zugrunde, ein Verfahren zur automatisierten Steuerung einer technischen Anlage der oben genannten Art anzugeben, bei dem auch bei der Prozessführung von mobilen Bedieneinheiten aus eine besonders hohe betriebliche Sicherheit mit besonders gering gehaltenem technologischem Aufwand sichergestellt sein soll. Des Weiteren soll ein hierzu besonders geeignetes Prozessleitsystem angegeben werden.

Bezüglich des Verfahrens wird diese Aufgabe erfindungsgemäß gelöst, indem eine Freigabe derjenigen Anlagenkomponenten, für die bei der Erzeugung der zugehörigen Stellbefehle die von der mobilen Bedieneinheit eingehenden Prozessführungssignale berücksichtigt werden, anhand eines Ortskennwerts für die mobile Bedieneinrichtung vorgenommen wird, zu dessen Ermittlung die drahtlos mit der mobilen Bedieneinheit kommunizierenden Schnittstellen genutzt werden.

Die Erfindung geht dabei von der Überlegung aus, dass zur Gewährleistung einer hohen betrieblichen Sicherheit in jedem Fall der aktuelle Standort, von dem aus ein Eingriff in den Prozessablauf einer der Anlagenkomponenten erfolgen soll, bei der Freigabe der Zugriffsmöglichkeiten auf die jeweilige Anlagenkomponente berücksichtigt werden sollte. Um den dafür erforderlichen betrieblichen technologischen Aufwand dabei besonders gering zu halten, sollte die Anzahl der für diese Freigabefunktion vorgesehenen Bauteile und Komponenten besonders gering gehalten werden. Unter gezielter Abkehr von der Bereitstellung eines eigenständigen, ausschließlich auf die Ermittlung des aktuellen Standorts der jeweiligen mobilen Bedieneinheit ausgerichteten Teilnetzes sollte die Ermittlung des für die Freigabe von Bedienzugriffen auf einzelne Anlagenkomponenten herangezogenen Ortskennwertes daher unter weitgehendem Rückgriff auf bereits vorhandene Bauteile oder Komponenten erfolgen. Dabei wird nunmehr ausgenutzt, dass die ohnehin für die drahtlose Übermittlung der aus den in die mobile Bedieneinheit eingegebenen Bedienbefehlen ermittelten Prozessführungssignale aufrecht zu erhaltende Kommunikationsverbindung zwischen der jeweiligen mobilen Bedieneinheit und den herangezogenen Schnittstellen hinsichtlich ihrer Übertragungseigenschaften durch messbare Parameter charakterisiert ist, die zur Bestimmung des Ortskennwerts für die mobile Bedieneinrichtung herangezogen werden können.

Für eine hohe Flexibilität bei der Prozessführung ist dabei eine drahtlose Datenübertragung zwischen der jeweiligen mobilen Bedieneinheit und den Schnittstellen vorgesehen, wobei die Schnittstellen für eine großflächige Abdeckung des gesamten Raumbereichs der jeweiligen technischen Anlage geeignet räumlich positioniert sein können. Die Weiterleitung der Prozessführungssignale von den Schnittstellen zur zentralen Steuereinrichtung kann dabei auch auf geeignete Weise, insbesondere ihrerseits ebenfalls drahtlos oder aber auch drahtgebunden in der Art eines herkömmlichen Kommunikationsnetzes, erfolgen.

Eine besonders hohe Flexibilität bei der Prozessführung bei gleichzeitig hoher betrieblicher Sicherheit ist erreichbar, indem in vorteilhafter Weiterbildung abhängig vom ermittelten Ortskennwert der mobilen Bedieneinheit in Relation zum Standort der betroffenen Anlagenkomponente eine Klassifizierung nach Stellbefehlkategorien vorgenommen wird, für die eine Zugriffsfreigabe für die jeweilige mobile Bedieneinheit auf die Anlagenkomponente erteilt wird. Dabei kann insbesondere eine Differenzierung zwischen denjenigen Stellbefehlen, die einen substantiellen Eingriff in den auf der Anlagenkomponente ablaufenden Prozess und damit ein entsprechendes Gefährdungspotential bei Fehlbedienungen darstellen können, und denjenigen Stellbefehlen, bei denen eine Gefährdung des betrieblichen Ablaufs bereits grundsätzlich ausgeschlossen ist, wie beispielsweise Diagnoseanforderungen oder das Auslesen von Betriebsparametern zum Zweck einer visualisierten Darstellung, vorgesehen sein.

Dazu wird vorteilhafterweise bei der Freigabe einer Anlagenkomponente, auf die von der jeweiligen mobilen Bedieneinheit in Abhängigkeit von deren Standort aus zugreifbar sein soll, eine Stellbefehlkategorie mit vorgegeben, wobei eine Berücksichtigung des von der mobilen Bedieneinheit empfangenen Prozessführungssignals ausschließlich bei der Erzeugung von der vorgegebenen Stellbefehlkategorie zugehörigen Stellbefehlen erfolgt. Dabei könnte beispielsweise vorgesehen sein, dass in Abhängigkeit vom ermittelten Ortskennwert für die mobile Bedieneinheit und dem Standort der jeweiligen Anlagenkomponente eine Freigabe lediglich für Stellbefehle der Kategorie "Diagnose" erteilt wird, wobei eine Freigabe von Stellbefehlen der Kategorie "Steuereingriffe" verweigert wird.

Zweckmäßigerweise werden zur Ermittlung des Ortskennwertes für die mobile Bedieneinrichtung für die Signalübertragung zwischen der jeweiligen Schnittstelle und der mobilen Bedieneinrichtung charakteristische Betriebsparameter ausgewertet. Dabei kann insbesondere die Auswertung einer Signalintensität, beispielsweise der Intensität der von der jeweiligen Schnittstelle empfangenen, von der mobilen Bedieneinheit ausgestrahlten Prozessführungssignale, ausgewertet werden, wobei insbesondere ein Vergleich mit einer Referenzintensität vorgenommen werden kann.

Um eine besonders hohe betriebliche Sicherheit gerade bei der Freigabe von Stellbefehlen für die jeweilige Anlagenkomponente zu gewährleisten, bei denen ein substantieller und somit möglicherweise gefährdungsrelevanter Eingriff in die jeweilige Anlagenkomponente vorgenommen wird, wird als Kriterium dafür, ob eine Freigabe für die jeweilige mobile Bedieneinheit vorgenommen werden soll, vorteilhafterweise zugrunde gelegt, ob die jeweilige Anlagenkomponente von dem aktuellen Standort der mobilen Bedieneinheit aus einsehbar ist.

Das von den mobilen Bedieneinheiten und den Schnittstellen in ihrer Gesamtheit aufgespannte drahtlose Kommunikationsnetz kann derart ausgelegt sein, dass die Signalübertragung von einer mobilen Bedieneinheit zur zentralen Steuereinrichtung ausschließlich über eine der Schnittstellen erfolgt. Dabei wird lediglich diese ausgewählte Schnittstelle für eine Übertragung von Signalen der mobilen Bedieneinheit zur zentralen Steuereinrichtung freigeschaltet. Bei einer derartigen Betriebsweise des drahtlosen Kommunikationsnetzes wird vorteilhafterweise ein für die ausgewählte Schnittstelle charakteristischer Positionskennwert als Ortskennwert für die mobile Bedieneinrichtung verwendet. Dabei wird somit die auch als aktueller "Access Point" bezeichnete, aktive Schnittstelle berücksichtigt, wobei als Freigabekriterium beispielsweise ausschließlich die vom Ort dieses aktuellen Access Point aus einsehbaren Anlagenkomponenten für einen Zugriff von der mobilen Bedieneinheit aus freigeschaltet werden.

Eine besonders zuverlässige Ermittlung eines Ortskennwerts für die mobile Bedieneinheit ist erreichbar, indem vorteilhafterweise bei der Übertragung von Signalen zwischen der mobilen Bedieneinheit und der jeweiligen Schnittstelle eine charakteristische Signalübertragungszeit ermittelt wird. Gerade bei der Berücksichtigung mehrerer Schnittstellen kann aus einer Anzahl der somit individuell gewonnenen Signalübertragungszeiten zwischen den einzelnen Schnittstellen und der mobilen Bedieneinheit eine vergleichsweise genaue Zuordnung eines Ortskennwerts vorgenommen werden.

Um eine besonders präzise Auswertung der Eigenschaften einer Signalübertragung zwischen der mobilen Bedieneinheit und den jeweiligen Schnittstellen zu ermöglichen, die ihrerseits wieder für eine besonders genaue Bestimmung des Ortskennwerts herangezogen werden kann, wird die Signalübertragung zwischen der jeweiligen Schnittstelle und der mobilen Bedieneinheit vorteilhafterweise zweikanalig durchgeführt. Dabei wird bei einer Signalübertragung zwischen der mobilen Bedieneinrichtung und der jeweiligen Schnittstelle ein Übertragungskanal eingerichtet, in dem die Prozessführungssignale von der mobilen Bedieneinheit zur jeweiligen Schnittstelle übermittelt werden. Zusätzlich zu diesem Übertragungskanal wird zweckmäßigerweise ein Kontrollkanal zwischen der mobilen Bedieneinrichtung und der jeweiligen Schnittstelle eingerichtet, über den primär keine eigentlichen Signale übertragen werden. Der Kontrollkanal wird vielmehr im Wesentlichen für die Übertragung von Testsignalen bereit gehalten, anhand derer durch eine gezielte Auswertung einzelner Signalparameter, beispielsweise der Signalintensität oder auch von Übertragungszeiten, die Ermittlung des Ortskennwerts erfolgt.

Ein für die Durchführung des Verfahrens besonders geeignetes Automatisierungs- oder Prozessleitsystem für eine technische Anlage umfasst eine zentrale Steuereinrichtung, die anhand von eingehenden Prozessführungssignalen Stellbefehle für eine Anzahl von Anlagenkomponenten erzeugt, wobei die datenausgangsseitig mit den Anlagenkomponenten verbundene Steuereinrichtung dateneingangsseitig mit einer Anzahl von Schnittstellen verbunden ist, die ihrerseits dateneingangsseitig zur Übertragung von Prozessführungssignalen drahtlos mit einer Anzahl von mobilen Bedieneinheiten verbunden sind, und wobei der Steuereinrichtung ein Freigabemodul zugeordnet ist, das jedem von einer mobilen Bedieneinheit eingehenden Prozessführungssignal anhand eines für die zugehörige mobile Bedieneinrichtung charakteristischen, über die drahtlos mit der mobilen Bedieneinheit kommunizierenden Schnittstellen ermittelten Ortskennwerts eine Identifikation derjenigen Anlagenkomponenten zuweist, für die das Prozessführungssignal bei der Erzeugung der an sie adressierten Stellbefehle zu berücksichtigen ist.

Das Prozessleitsystem ist somit gezielt auf eine Verwertung von für die Art und/oder Qualität der drahtlosen Signalübertragung zwischen der mobilen Bedieneinheit und/oder den Schnittstellen charakteristischen Parametern ausgelegt. Anhand derartiger Parameter, die im Prozessleitsystem für die Ermittlung eines Ortskennwerts für die jeweilige mobile Bedieneinheit genutzt werden, kann für jedes von einer mobilen Bedieneinheit aus eingehende Prozessführungssignal eine Zuordnung vorgenommen werden, für welche Anlagenkomponenten das jeweilige Prozessführungssignal berücksichtigt werden darf und für welche nicht.

Bei der Zuordnung von anlagenkomponentenspezifischen Freigaben zu den von den mobilen Bedieneinheiten eingehenden Prozessführungssignalen kann vorteilhafterweise auch noch berücksichtigt werden, welcher Art oder Kategorie der für die jeweilige Anlagenkomponente vorgesehene, noch zu erzeugende Stellbefehl angehört. Um in dieser Art einer gestuften oder qualifizierten Freigabe von über die mobile Bedieneinheit empfangenen Prozessführungssignalen für einzelne Anlagenkomponenten eine besondere bedarfs- und situationsgerechte Handhabung der empfangenen Prozessführungssignale zu ermöglichen, gibt das Freigabemodul vorteilhafterweise bei der Identifikation der Anlagenkomponenten für jede betroffene Anlagenkomponente eine Stellbefehlkategorie für die Berücksichtigung des Prozessführungssignals vor.

Zur bedarfsgerechten Erzeugung geeigneter Freigabekennwerte ist das Freigabemodul vorteilhafterweise eingangsseitig mit zur Erfassung von für die Signalübertragung zwischen der jeweiligen Schnittstelle und der mobilen Bedieneinheit charakteristischen Betriebsparametern, insbesondere einer Signalintensität, vorgesehenen Sensoren verbunden.

Zweckmäßigerweise ist das Freigabemodul zur Berücksichtigung der Einsehbarkeit der jeweiligen Anlagenkomponente vom aktuellen Standort der mobilen Bedieneinheit aus als Kriterium für die Freigabe eines Prozessführungszugriffs auf die jeweilige Anlagenkomponente ausgelegt. In weiterer oder alternativer vorteilhafter Ausgestaltung legt das Freigabemodul als Ortskennwert einen für diejenige Schnittstelle, über die aktuell die Übertragung der Prozessführungssignale an die zentrale Steuereinrichtung ausschließlich erfolgt, charakteristischen Positionskennwert zugrunde.

Um die Berücksichtigung eines Zeitkennwerts in der Art einer Signalübertragungszeit bei der Auswertung der Übertragungseigenschaften zwischen der mobilen Bedieneinheit und der jeweiligen Schnittstelle zu ermöglichen, ist das Freigabemodul vorteilhafterweise eingangsseitig mit Zeitmessgeräten zur Erfassung jeweils einer charakteristischen Signalübertragungszeit zwischen der jeweiligen Schnittstelle und der mobilen Bedieneinrichtung verbunden.

Die mit der Erfindung erzielten Vorteile bestehen insbesondere darin, dass durch eine gezielte Nutzung der Übertragungseigenschaften bei einer Signalübertragung von der mobilen Bedieneinheit auf die jeweiligen Schnittstellen des Prozessleitsystems unter Rückgriff auf bereits bestehende Bauteile und Komponenten und somit mit besonders geringem apparativen Aufwand eine zuverlässige Ermittlung eines Ortskennwerts für die jeweilige mobile Bedieneinheit ermöglicht ist. Durch die Berücksichtigung dieses Ortskennwerts bei einer Entscheidung darüber, für welche Anlagenkomponenten die von der jeweiligen mobilen Bedieneinheit eingehenden Prozessführungssignale berücksichtigt werden dürfen, ist eine besonders hohe betriebliche Sicherheit bei der Prozessführung bei gleichzeitig hoher Flexibilität für das Bedienpersonal gewährleistet. Dies ist insbesondere auch der Fall, wenn die zu steuernde technische Anlage eine vergleichsweise große Vielzahl von Anlagenkomponenten umfasst, die darüber hinaus auch über einen vergleichsweise großen räumlichen Bereich verteilt sein können.

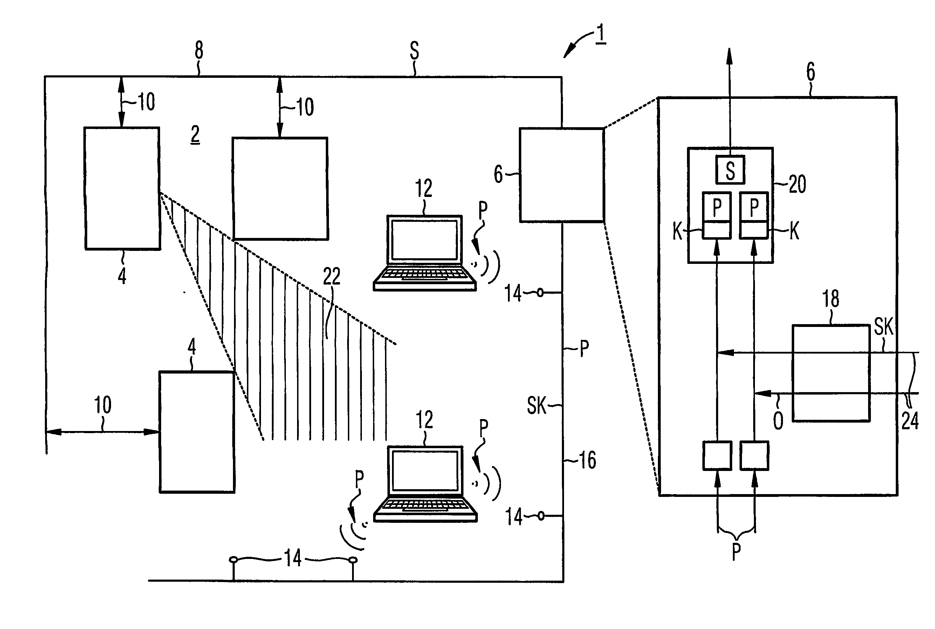

Ein Ausführungsbeispiel der Erfindung wird anhand einer Zeichnung näher erläutert. Dabei zeigt die Figur ein Prozessleitsystem einer technischer Anlage.

Das Automatisierungs- oder Prozessleitsystem 1 gemäß der Figur ist einer vergleichsweise komplexen technischen Anlage 2 zugeordnet, die eine Vielzahl von in der Figur lediglich schematisch dargestellten, miteinander wechselwirkenden und zur Durchführung eines komplexen industriellen Prozesses aufeinander abgestimmten Anlagenkomponenten 4 umfasst. Bei den Anlagenkomponenten 4 kann es sich insbesondere um ihrerseits vergleichsweise komplexe Komponenten wie beispielsweise Maschinen, Roboter oder Systemkomponenten handeln. Je nach vorgesehenem Einsatzzweck innerhalb des Gesamtprozesses der technischen Anlage 2 können die Anlagenkomponenten 4 dabei vergleichsweise großräumig dimensioniert und hinsichtlich ihrer räumlichen Anordnung über ein vergleichsweise großes Gesamtareal wie beispielsweise eine Produktionshalle verteilt sein.

Das Prozessleitsystem 1 ist zur Steuerung des Gesamtprozesses der technischen Anlage 2 vorgesehen. Dazu ist das Prozessleitsystem 1 insbesondere daraufhin ausgelegt, eine synchronisierte und aufeinander abgestimmte Arbeits- und Funktionsweise sämtlicher Anlagenkomponenten 4 der technischen Anlage 2 zu gewährleisten. Zu diesem Zweck umfasst das Prozessleitsystem 1 eine zentrale Steuereinrichtung 6, die über ein Kommunikationsnetzwerk 8 mit den Anlagenkomponenten 4 kommuniziert. Das Kommunikationsnetzwerk 8 ist dabei im Ausführungsbeispiel als drahtgebundenes und konventionell verkabeltes Netzwerk ausgeführt; es könnte sich aber auch um ein drahtloses Netzwerk zur Signalübertragung handeln.

Wie durch die Doppelpfeile 10 angedeutet, ist jede Anlagenkomponente 4 datenseitig an das Kommunikationsnetzwerk 8 angeschlossen. Somit sind der zentralen Steuereinrichtung 6 von jeder Anlagenkomponente 4 aus für diese charakteristische Betriebsparameter und weitere Kenngrößen zuführbar, die innerhalb der zentralen Steuereinrichtung 6 jederzeit eine bedarfsgerechte Erfassung des Betriebszustandes jeder Anlagenkomponente 4 ermöglichen. Des Weiteren sind über das Kommunikationsnetzwerk 8 jeder Anlagenkomponente 4 von der zentralen Steuereinrichtung 6 erzeugte Stellbefehle S zuführbar, die insbesondere innerhalb von jeder Anlagenkomponente 4 spezifisch zugeordneten Steuermodulen in konkrete Steuerbefehle für einzelne Bauteile der jeweiligen Anlagenkomponente 4 umgesetzt werden können.

Durch die Übertragung geeigneter Stellbefehle S über das Kommunikationsnetzwerk 8 steuert die zentrale Steuereinrichtung 6 somit individuell das Verhalten jeder Anlagenkomponente 4, wobei insbesondere ein synchronisierter und aufeinander abgestimmter Prozessablauf in den einzelnen Anlagenkomponenten 4 aufrecht erhalten ist.

Zur manuellen Betriebsführung oder auch zur Vorgabe einzelner Prozessziele oder einzelner Prozessleitungsschritte sind der zentralen Steuereinrichtung 6 Bedienbefehle des Bedienpersonals zuführbar. Zur Eingabe geeigneter Bedienbefehle kann die zentrale Steuereinrichtung 6 dabei eingangsseitig mit einer ortsfest installierten Eingabevorrichtung versehen sein. Im Ausführungsbeispiel ist das Prozessleitsystem 1 jedoch für eine besonders flexible und insbesondere räumlich ungebundene Eingabe von Bedienbefehlen durch das Bedienpersonal ausgebildet. Dazu umfasst das Prozessleitsystem 1 eine Anzahl von mobilen Bedieneinheiten 12. Im Ausführungsbeispiel sind als mobile Bedieneinheiten 12 Laptops vorgesehen; alternativ oder zusätzlich können als weitere mobile Bedieneinheiten 12 aber auch Panels oder Webpads oder andere geeignete Eingabevorrichtungen vorgesehen sein.

Vom Bedienpersonal in die mobilen Bedieneinrichtungen 12 eingegebene Bedien- oder Prozessführungsbefehle werden dort in geeignete, datenseitig übertragbare Prozessführungssignale P umgesetzt. Zur Weiterleitung der Prozessführungssignale P sind die mobilen Bedieneinheiten 12 drahtlos mit geeigneten Empfängern oder Schnittstellen 14 vernetzt. Beispiele für drahtlose Netze sind WLAN entsprechend IEEE 802.11, Bluetooth oder andere Verfahren, die sich zur drahtlosen Übertragung digitaler Signale eignen. Die Schnittstellen 14 sind dabei hinsichtlich ihrer Anzahl und/oder räumlichen Platzierung derart im der technischen Anlage 2 zugeordneten Raumbereich oder Areal verteilt, dass in jedem Fall bei einer Platzierung einer der mobilen Bedieneinheiten 12 in dem zugeordneten Areal eine zuverlässige Funkverbindung mit zumindest einer der Schnittstellen 14 sichergestellt ist. Die Schnittstellen 14 sind ihrerseits über ein Kommunikationsnetzwerk 16 mit der zentralen Steuereinrichtung 6 verbunden. Als Kommunikationsnetzwerk 16 ist dabei im Ausführungsbeispiel ebenfalls ein drahtgebundenes, herkömmliches Netzwerk vorgesehen; es könnte sich aber auch hier ebenfalls um ein drahtloses Netzwerk handeln.

Beim Betrieb der technischen Anlage 2 und des ihr zugeordneten Prozessleitsystems 1 werden vom Bedienpersonal über eine oder mehrere der mobilen Bedieneinheiten 12 Bedien- oder Steuerbefehle erfasst und in geeigneter Form erzeugte Prozessführungssignale P über die jeweils aktiven Schnittstellen 14 der zentralen Steuereinrichtung 6 zugeführt. Auf der Grundlage der eingehenden Prozessführungssignale P erzeugt die zentrale Steuereinrichtung 6 sodann geeignete Stellbefehle S für einzelne Anlagenkomponenten 4, die diesen dann über das Kommunikationsnetzwerk 8 zugeführt werden.

Auf Grund der Mobilität der mobilen Bedieneinheiten 12 besteht bei einem derartigen Konzept jedoch grundsätzlich die Gefahr, dass ein Bediener von seinem aktuellen Standort aus auch eine Anlagenkomponente 4 unmittelbar beeinflussen könnte, die er gar nicht oder nur schlecht einsehen kann. Um hieraus resultierende mögliche Fehlbedienungen zu vermeiden und auch das Risiko auszuschließen, dass es aufgrund einer zu großen räumlichen Entfernung des Standorts des Bedieners von der aktuell zu beeinflussenden Anlagenkomponenten 4 aufgrund hoher Signalübertragungs- oder Reaktionszeiten zu Fehlhandlungen kommen könnte, ist das Prozessleitsystem 1 für eine selektive Freigabe von Prozessführungssignalen P bei der Erzeugung von Stellbefehlen S für die einzelnen Anlagenkomponenten 4 ausgerüstet. Dazu umfasst die zentrale Steuereinrichtung 6, wie in der Figur im vergrößerten Ausschnitt schematisch dargestellt, ein Freigabemodul 18.

Das Freigabemodul 18 ordnet jedem in der zentralen Steuereinrichtung 6 eintreffenden Prozessführungssignal P eine Kennung K zu, die angibt, für welche der Anlagenkomponenten 4 bei der Erzeugung der zugehörigen Stellbefehle S eine Berücksichtigung des jeweiligen Prozessführungssignal P erfolgen darf und soll. Ein datenstromseitig nachgeschaltetes Rechnermodul 20, das anhand der eingehenden Prozessführungssignale P Stellbefehle S für die einzelnen Anlagenkomponenten 4 erzeugt, überprüft dabei für jedes Prozessführungssignal P anhand der diesem zugeordneten Kennung K, ob dieses Prozessführungssignal P bei der Erzeugung des jeweiligen Stellbefehls S berücksichtigt werden darf.

Die vom Freigabemodul 18 generierte, für das jeweilige Prozessführungssignal P spezifische Kennung K identifiziert dabei einerseits anhand eines hinterlegten Codes, für welche der Anlagenkomponenten 4 das jeweilige Prozessführungssignal P freigeschaltet ist und somit berücksichtigt werden darf. Des Weiteren spezifiziert die Kennung K in einem weiteren spezifischen Code, für welche Art oder Kategorie von Stellbefehlen S das jeweilige Prozessführungssignal P zu berücksichtigen ist. Somit ist nach erfolgter Zuordnung der Kennung K für jedes Prozessführungssignal P eindeutig festgelegt, welche Kategorie oder Art von Stellbefehlen S für welche der Anlagenkomponenten 4 anhand dieses Prozessführungssignals P erzeugt werden darf.

Hinsichtlich der Kategorie oder Art der Stellbefehle S wird dabei insbesondere unterschieden zwischen nicht gefahrenrelevanten Stellbefehlen S wie beispielsweise der Abfrage von Diagnoseparametern und möglicherweise gefahrenrelevanten Stellbefehlen S wie beispielsweise aktiven Kontrolleingriffen in den auf der jeweiligen Anlagenkomponente 4 ablaufenden Teilprozess. Über die Kennung K kann dabei somit jedem Prozessführungssignal P eine eindeutige Freigabe zugeordnet werden, ob und in welchem Umfang es bei der Generierung von Stellbefehlen S für individuelle Anlagenkomponenten 4 zu berücksichtigen ist. Die Kennung K kann dabei insbesondere ausweisen, dass das jeweilige Prozessführungssignal P für eine bestimmte Anlagenkomponente 4 voll umfänglich, lediglich im eingeschränkten Umfang oder auch gar nicht berücksichtigt werden soll.

Als Kriterium für eine Freigabe und gegebenenfalls deren Grad zur Berücksichtigung des jeweiligen Prozessführungssignals P, also bei der Erzeugung der zugeordneten Kennung K, wird die aktuelle räumliche Positionierung der jeweiligen mobilen Bedieneinheit 12 im Verhältnis zur jeweiligen Anlagenkomponente 4 herangezogen. Dazu wird ein für die aktuelle Position der jeweiligen mobilen Bedieneinheit charakteristischer Ortskennwert O ermittelt und für die Erzeugung der Kennung K zugrunde gelegt. Bei der Erzeugung der Kennung K anhand des Ortskennwertes 0 wird insbesondere berücksichtigt, ob und gegebenenfalls wie gut die jeweilige Anlagenkomponente 4 vom aktuellen Standort der mobilen Bedieneinheit 12 aus einsehbar ist und wie unmittelbar der Bediener vom aktuellen Standort der mobilen Bedieneinheit 12 aus Einfluss auf die jeweilige Anlagenkomponente 4 nehmen kann. Dabei kann insbesondere berücksichtigt werden, ob die Sichtlinie vom aktuellen Standort der mobilen Bedieneinheit 12 aus zur jeweiligen Anlagenkomponente 4 durch andere Anlagenkomponenten 4 ganz oder teilweise blockiert ist, wie dies beispielhaft in der Figur durch den angedeuteten Sichtkegel 22 symbolisiert ist.

Um den apparativen und technologischen Aufwand bei der Ermittlung des für die Freigabe berücksichtigten Ortskennwerts O für die jeweilige mobile Bedieneinheit 12 besonders gering zu halten, ist beim Prozessleitsystem 1 die Auswertung charakteristischer Signalübertragungseigenschaften bei der Kommunikation der jeweiligen mobilen Bedieneinheit 12 mit den Schnittstellen 14 vorgesehen. Unter bewusstem Verzicht auf ein separates Orterkennungssystem erfolgt die Bestimmung des aktuellen Standorts der jeweiligen mobilen Bedieneinheit 12 somit unter Rückgriff auf die für die Kommunikation mit der zentralen Steuereinrichtung 6 ohnehin erforderlichen Komponenten.

Dazu ist das Freigabemodul 18, das den Ortskennwert O für die jeweilige mobile Bedieneinheit 12 ermittelt, anhand dessen die Kennung K für das jeweilige Prozessführungssignal P erzeugt wird, eingangsseitig über Datenleitungen 24 mit geeigneten an den jeweiligen Schnittstellen 14 angeordneten Sensoren verbunden. Die Verbindung des Freigabemoduls 18 mit den Sensoren kann aber auch über das ohnehin vorgesehene Kommunikationsnetz 16 erfolgen. Über die zugeordneten Sensoren ermittelt das Freigabemodul 18 anhand charakteristischer Signalübertragungskennwerte SK wie beispielsweise der Intensität der von der jeweiligen mobilen Bedieneinheit 12 in der jeweiligen Schnittstelle 14 empfangenen Signale und/oder deren charakteristischer Signalübertragungszeit geeignete Parameter, wobei insbesondere durch Auswertung der entsprechenden Übertragungsparameter für eine Mehrzahl der Schnittstellen 14 eine vergleichsweise genaue Bestimmung des Ortskennwerts O für die mobile Bedieneinheit 12 erreicht werden kann. Als charakteristische Signalübertragungskennwerte SK werden dabei insbesondere Eigenschaften der analogen Signale in den Schnittstellen 14, also beispielsweise Feldstärken, Übertragungszeiten oder Signal-Rausch-Abstände oder -Verhältnisse, ausgewertet.

Alternativ oder zusätzlich kann aber auch vorgesehen sein, dass die Kommunikation der mobilen Bedieneinheit 12 mit der zentralen Steuereinrichtung 6 über lediglich eine der Schnittstellen 14 erfolgen soll, wobei die für die Signalübertragung günstigste Schnittstelle 14 ausgewählt und sämtliche anderen Schnittstellen 14 ausgeblendet werden. Bei einer derartigen Nutzung der Schnittstellen 14 kann als Ortskennwert O für die mobile Bedieneinheit 12 ein für die ausgewählte Schnittstelle 14 charakteristischer Ortskennwert O herangezogen werden.

Um den Zugriff auf eine Anlagenkomponente 4 ausschließlich auf denjenigen Raumbereich zu beschränken, von wo aus die jeweilige Anlagenkomponente 4 beispielsweise einsehbar ist, kann eine zugeordnete Schnittstelle 14 beispielsweise über geeignete Konfigurierung einer für eine Signalübertragung mit der mobilen Bedieneinheit 12 vorgesehenen Funkantenne derart ausgestaltet sein, dass eine Signalübertragung zwischen der mobilen Bedieneinheit 12 und dieser Schnittstelle 14 nur dann möglich ist, wenn die jeweilige Anlagenkomponente 4 von der aktuellen Position der mobilen Bedieneinheit 12 aus einsehbar ist. In diesem Fall kann beispielsweise eine Freigabe der von der mobilen Bedieneinheit 12 übertragenen Prozessführungssignale P für die jeweilige Anlagenkomponente 4 nur für denjenigen Fall vorgesehen sein, dass die Signalübertragung über die zugeordnete Schnittstelle 14 erfolgt.

Alternativ oder zusätzlich kann vorgesehen sein, dass bei einer Signalübertragung zwischen der jeweiligen mobilen Bedieneinheit 12 und der oder den Schnittstellen 14 daten- oder funkseitig jeweils zwei parallele Übertragungskanäle aktiviert und genutzt werden, wobei ein Übertragungskanal zur eigentlichen Übertragung der Prozessführungssignale P und der andere Übertragungskanal zur separaten Übertragung von Testsignalen genutzt wird, die ihrerseits hinsichtlich ihrer Signaleigenschaften zur Ermittlung des Ortskennwerts ausgewertet werden.

## Patentansprüche

1. Verfahren zur automatisierten Steuerung einer technischen Anlage (2) mit einer Mehrzahl von zur Abwicklung von Prozessschritten datenseitig miteinander verschalteten Anlagenkomponenten (4), denen von einer zentralen Steuereinrichtung (6) unter Berücksichtigung von dort eingehenden Prozessführungssignalen (P) erzeugte Stellbefehle (S) zugeführt werden,
**dadurch gekennzeichnet, dass**
in einer mobilen Bedieneinrichtung (12) erzeugte Prozessführungssignale (P) drahtlos an Schnittstellen (14) übertragen und von diesen an die zentrale Steuereinrichtung (6) weitergeleitet werden, und dass eine Freigabe von Zugriffsmöglichkeiten auf diejenigen Anlagenkomponenten (4), für die bei der Erzeugung der zugehörigen Stellbefehle (S) die von der mobilen Bedieneinheit (12) eingehenden Prozessführungssignale (P) berücksichtigt werden, anhand eines für die aktuelle Position der mobilen Bedieneinrichtung (12) charakteristischen Ortskennwerts (O) vorgenommen wird, zu dessen Ermittlung die drahtlos mit der mobilen Bedieneinheit (12) kommunizierenden Schnittstellen (14) genutzt werden.

2. Verfahren nach Anspruch 1, bei dem bei der Freigabe einer Anlagenkomponente (12) eine Stellbefehlkategorie mit vorgegeben wird, wobei eine Berücksichtigung des jeweiligen Prozessführungssignals (P) ausschließlich bei der Erzeugung von der vorgegebenen Stellbefehlkategorie zugeordneten Stellbefehlen (S) erfolgt.

3. Verfahren nach Anspruch 1 oder 2, bei dem zur Ermittlung des Ortskennwerts (O) für die Signalübertragung zwischen der jeweiligen Schnittstelle (14) und der mobilen Bedieneinrichtung (12) charakteristische Betriebsparameter, insbesondere eine Signalintensität, ausgewertet werden.

4. Verfahren nach einem der Ansprüche 1 bis 3, bei dem zur Freigabe der über die mobile Bedieneinrichtung (12) beeinflussbaren Anlagenkomponenten (4) anhand des Ortskennwerts (O) und anhand von für die jeweilige Anlagenkomponente (4) hinterlegten Ortsparametern ermittelt wird, ob die jeweilige Anlagenkomponente (4) vom aktuellen Standort der mobilen Bedienungseinrichtung (12) aus einsehbar ist.

5. Verfahren nach einem der Ansprüche 1 bis 4, bei dem unter allen verfügbaren Schnittstellen (14) eine ausgewählt wird, über die aktuell die Übertragung der Prozessführungssignale (P) an die zentrale Steuereinrichtung (6) ausschließlich erfolgt, wobei ein für die ausgewählte Schnittstelle (14) charakteristischer Positionskennwert als Ortskennwert (O) für die mobile Bedieneinrichtung (12) verwendet wird.

6. Verfahren nach einem der Ansprüche 1 bis 5, bei dem bei einer Signalübertragung zwischen der mobilen Bedieneinrichtung (12) und einer Schnittstelle (14) die Signalübertragungszeit bei der Ermittlung des Ortskennwerts (0) berücksichtigt wird.

7. Verfahren nach einem der Ansprüche 1 bis 6, bei dem bei einer Signalübertragung zwischen der mobilen Bedieneinrichtung (12) und einer Schnittstelle (14) zusätzlich zu einem Übertragungskanal für die Prozessführungssignale (P) ein Kontrollkanal eingerichtet wird, dessen Übertragungseigenschaften bei der Ermittlung des Ortskennwerts (O) berücksichtigt werden.

8. Prozessleitsystem für eine technische Anlage (2), bei dem eine zentrale Steuereinrichtung (6) anhand von eingehenden Prozessführungssignalen (P) Stellbefehle (S) für eine Anzahl von Anlagenkomponenten (4) erzeugt,
**dadurch gekennzeichnet, dass**
die datenausgangsseitig mit den Anlagenkomponenten (4) verbundene Steuereinrichtung (6) dateneingangsseitig mit einer Anzahl von Schnittstellen (14) verbunden ist, die ihrerseits dateneingangsseitig zur Übertragung von Prozessführungssignalen (P) drahtlos mit einer Anzahl von mobilen Bedieneinheiten (12) verbunden sind, und dass der zentralen Steuereinrichtung (6) ein Freigabemodul (18) zugeordnet ist, das jedem von einer mobilen Bedieneinrichtung (12) eingehenden Prozessführungssignal (P) anhand eines für die aktuelle Position der zugehörigen mobilen Bedieneinrichtung (12) charakteristischen, über die drahtlos mit der mobilen Bedieneinheit (12) kommunizierenden Schnittstellen (14) ermittelten Ortskennwerts (0) eine Identifikation derjenigen Anlagenkomponenten (4) zuweist, für die das Prozessführungssignal (P) bei der Erzeugung der an sie adressierten Stellbefehle (S) zu berücksichtigen ist.

9. Prozessleitsystem (1) nach Anspruch 8, bei dem das Freigabemodul (18) bei der Identifikation der Anlagenkomponenten (4) für jede betroffene Anlagenkomponente (4) eine Stellbefehlkategorie für die Berücksichtigung des Prozessführungssignals (P) vorgibt.

10. Prozessleitsystem (1) nach Anspruch 8 oder 9, dessen Freigabemodul (18) eingangsseitig mit zur Erfassung von für die Signalübertragung zwischen der jeweiligen Schnittstelle (14) und der mobilen Bedieneinrichtung (12) charakteristischen Betriebsparametern, insbesondere einer Signalintensität, vorgesehenen Sensoren verbunden ist.

11. Prozessleitsystem (1) nach einem der Ansprüche 8 bis 10, bei dem das Freigabemodul (18) anhand des Ortskennwerts (O) und anhand von für die jeweilige Anlagenkomponente (4) hinterlegten Ortsparametern ermittelt, ob die jeweilige Anlagenkomponente (4) vom aktuellen Standort der mobilen Bedieneinrichtung (12) aus einsehbar ist.

12. Prozessleitsystem (1) nach einem der Ansprüche 8 bis 11, bei dem das Freigabemodul (18) als Ortskennwert (O) einen für die Schnittstelle (14), über die aktuell die Übertragung der Prozessführungssignale (P) an die zentrale Steuereinrichtung (6) ausschließlich erfolgt, charakteristischen Positionskennwert zugrundelegt.

13. Prozessleitsystem (1) nach einem der Ansprüche 8 bis 12, dessen Freigabemodul (18) eingangsseitig mit Zeitmessgeräten zur Erfassung jeweils einer charakteristischen Signalübertragungszeit zwischen der jeweiligen Schnittstelle (14) und der mobilen Bedieneinrichtung (12) verbunden ist.

14. Prozessleitsystem (1) nach einem der Ansprüche 8 bis 13, dessen Schnittstellen (14) für eine mehrkanalige, drahtlose Signalübertragung zu den mobilen Bedieneinrichtungen (12) ausgelegt sind, wobei das Freigabemodul (18) eingangsseitig mit zur Erfassung von für die Übertragungseigenschäften eines zwischen der jeweiligen Schnittstelle (14) und der mobilen Bedieneinrichtung (12) parallel zu einem Übertragungssignal für die Prozessführungssignale (P) eingerichteten Kontrollkanals charakteristischen Betriebsparametern vorgesehenen Sensoren verbunden ist.

## Claims

1. Method for the automated control of a technical installation (2) having a plurality of installation components (4) which are connected to one another on the data side for the purpose of executing process steps and which are supplied with actuation commands (S) generated by a central control device (6) taking into account process control signals (P) arriving there,
**characterized in that**
process control signals (P) generated in a mobile operating device (12) are wirelessly transmitted to interfaces (14) and are forwarded from the latter to the central control device (6), and **in that** options for accessing those installation components (4) for which the process control signals (P) arriving from the mobile operating unit (12) are taken into account when generating the associated actuation commands (S) are enabled on the basis of a location characteristic value (O) which is characteristic of the current position of the mobile operating device (12) and is determined using the interfaces (14) which wirelessly communicate with the mobile operating unit (12).

2. Method according to Claim 1, in which an actuation command category is concomitantly predefined when enabling an installation component (12), the respective process control signal (P) being taken into account solely when generating actuation commands (S) associated with the predefined actuation command category.

3. Method according to Claim 1 or 2, in which, in order to determine the location characteristic value (O), operating parameters which are characteristic of the signal transmission between the respective interface (14) and the mobile operating device (12), in particular a signal intensity, are evaluated.

4. Method according to one of Claims 1 to 3, in which, in order to enable the installation components (4) which can be influenced by means of the mobile operating device (12), the location characteristic value (0) and location parameters stored for the respective installation component (4) are used to determine whether the respective installation component (4) can be seen from the current location of the mobile operating device (12).

5. Method according to one of Claims 1 to 4, in which an interface which is currently being used to solely transmit the process control signals (P) to the central control device (6) is selected from all available interfaces (14), a position characteristic value which is characteristic of the selected interface (14) being used as the location characteristic value (0) for the mobile operating device (12).

6. Method according to one of Claims 1 to 5, in which, in the case of signal transmission between the mobile operating device (12) and an interface (14), the signal transmission time is taken into account when determining the location characteristic value (O).

7. Method according to one of Claims 1 to 6, in which, in the case of signal transmission between the mobile operating device (12) and an interface (14), a control channel whose transmission properties are taken into account when determining the location characteristic value (0) is set up in addition to a transmission channel for the process control signals (P).

8. Process control system for a technical installation (2), in which a central control device (6) uses incoming process control signals (P) to generate actuation commands (S) for a number of installation components (4),
**characterized in that**
the control device (6) which is connected to the installation components (4) on the data output side is connected, on the data input side, to a number of interfaces (14) which, for their part, are wirelessly connected, on the data input side, to a number of mobile operating units (12) in order to transmit process control signals (P), and **in that** the central control device (6) is assigned an enable module (18) which allocates an identification of those installation components (4) for which the process control signal (P) needs to be taken into account when generating the actuation commands (S) addressed to them to each process control signal (P) arriving from a mobile operating device (12) using a location characteristic value (O) which is characteristic of the current position of the associated mobile operating device (12) and is determined by means of the interfaces (14) which wirelessly communicate with the mobile operating unit (12).

9. Process control system (1) according to Claim 8, in which the enable module (18) predefines an actuation command category for taking into account the process control signal (S) for each affected installation component (4) when identifying the installation components (4).

10. Process control system (1) according to Claim 8 or 9, the enable module (18) of which is connected, on the input side, to sensors which are intended to detect operating parameters which are characteristic of the signal transmission between the respective interface (14) and the mobile operating device (12), in particular a signal intensity.

11. Process control system (1) according to one of Claims 8 to 10, in which the enable module (18) uses the location characteristic value (0) and location parameters stored for the respective installation component (4) to determine whether the respective installation component (4) can be seen from the current location of the mobile operating device (12).

12. Process control system (1) according to one of Claims 8 to 11, in which the enable module (18) takes as a basis, as the location characteristic value (0) a position characteristic value which is characteristic of the interface (14) which is currently being used to solely transmit the process control signals (P) to the central control device (6).

13. Process control system (1) according to one of Claims 8 to 12, the enable module (18) of which is connected, on the input side, to time measuring devices for recording a respective characteristic signal transmission time between the respective interface (14) and the mobile operating device (12).

14. Process control system (1) according to one of Claims 8 to 13, the interfaces (14) of which are designed for multichannel, wireless signal transmission to the mobile operating devices (12), the enable module (18) being connected, on the input side, to sensors which are intended to detect operating parameters which are characteristic of the transmission properties of a control channel set up between the respective interface (14) and the mobile operating device (12) in parallel with a transmission signal for the process control signals (P).

## Revendications

1. Procédé de commande automatisé d'une installation ( 2 ) technique, comprenant une multiplicité de composants ( 4 ) d'installation qui sont câblés entre eux du côté données pour le déroulement de stades de processus et auxquels sont envoyés des ordres de réglage produits par un dispositif ( 6 ) central de commande en tenant compte de signaux ( P) de conduite de processus qui y entrent,
**caractérisé en ce que**
on transfert sans fil des signaux ( P ) de conduite de processus produits dans un dispositif ( 12 ) mobile de service à des interfaces ( 14 ) et on les achemine de celles-ci au dispositif ( 6 ) central de commande et **en ce qu'**on effectue, au moyen d'une caractéristique ( O ) de localisation, caractéristique de la position instantanée du dispositif ( 12 ) mobile de service, une libération de possibilités d'accès aux composants ( 4 ) de l'installation, pour lesquels il est tenu compte, lors de la production des ordres ( S ) de réglage associés, des signaux ( P ) de conduite de processus entrés par l'unité ( 12 ) mobile de service, caractéristique pour la détermination de laquelle on utilise les interfaces ( 14 ) communiquant sans fil avec l'unité ( 12 ) mobile de service.

2. Procédé suivant la revendication 1, dans lequel, lors de la libération d'un composant ( 12 ) de l'installation, on prescrit une catégorie d'ordres de réglage, une prise en compte du signal ( P ) de conduite de processus respective s'effectuant exclusivement lors de la production d'ordres ( S ) de réglage associés à la catégorie d'ordres de réglage prescrite.

3. Procédé suivant la revendication 1 ou 2, dans lequel, pour la détermination de la caractéristique ( O) de localisation pour la transmission du signal entre l'interface ( 14 ) respective et le dispositif ( 12 ) mobile de service, on exploite des paramètres de fonctionnement caractéristiques, notamment une intensité du signal.

4. Procédé suivant l'une des revendications 1 à 3, dans lequel, pour la libération du composant ( 4 ) de l'installation pouvant être influencée par le dispositif ( 12 ) mobile de service, on détermine, au moyen de la valeur (O ) de localisation et au moyen de paramètres de localisation mémorisés pour les composants ( 4 ) respectifs de l'installation, si le composant ( 4 ) respectif de l'installation peut être vu à partir du lieu instantané où se trouve le dispositif ( 12 ) mobile de service.

5. Procédé suivant l'une des revendications 1 à 4, dans lequel on choisit, parmi toutes les interfaces ( 14 ) disponibles, l'une d'entre elles, par laquelle instantanément la transmission des signaux ( P ) de conduite de processus au dispositif ( 6 ) central de commande s'effectue exclusivement, une caractéristique de position caractérisant l'interface ( 14 ) choisie étant utilisée comme valeur ( O ) de localisation du dispositif ( 12 ) mobile de service.

6. Procédé suivant l'une des revendications 1 à 5, dans lequel, lors d'une transmission de signal entre le dispositif ( 12 ) mobile de service et une interface ( 14 ), on tient compte de la durée de transmission du signal lors de la détermination de la caractéristique ( O ) de localisation.

7. Procédé suivant l'une des revendications 1 à 6, dans lequel, lors d'une transmission de signal entre le dispositif ( 12 ) mobile de service et une interface ( 14 ), on établit supplémentairement à un canal de transmission des signaux ( P ) de conduite de processus un canal de contrôle, dont on tient compte des propriétés de transmission lors de la détermination de la caractéristique ( O ) de localisation.

8. Système de conduite de processus pour une installation ( 2 ) technique, dans lequel un dispositif ( 6 ) central de commande produit, au moyen de signaux ( P) de conduite de processus qui y entrent, des ordres ( S ) de réglage d'un certain nombre de composants ( 4 ) de l'installation,
**caractérisé en ce que**
le dispositif ( 6 ) de commande, relié côté sortie des données aux composants ( 4 ) de l'installation, est relié côté entrée de données à un certain nombre d'interfaces ( 14 ), qui pour leur part sont reliées sans fil du côté entrée des données pour la transmission de signaux ( P ) de conduite de processus à un certain nombre d'unités ( 12 ) mobiles de service et **en ce qu'**au dispositif ( 6 ) central de commande est associé un module ( 18 ) de libération, **en ce qu'**à chaque signal ( P ) de conduite de processus entré par un dispositif ( 12 ) mobile de service est associé, au moyen d'une caractéristique ( O ) de localisation caractéristique de la position instantanée du dispositif ( 12 ) mobile de service associé et déterminée par les interfaces ( 14 ) communiquant sans fil avec l'unité ( 12 ) mobile de service, une identification des composants ( 4 ) de l'installation pour lesquels le signal ( P ) de conduite de processus doit être considéré lors de la production des ordres ( S ) de réglage qui leur sont adressés.

9. Système ( 1 ) de conduite de processus suivant la revendication 8, dans lequel le module ( 18 ) de libération prescrit lors de l'identification des composants ( 4 ) de l'installation, pour chaque composant ( 4 ) concerné de l'installation, une catégorie d'ordres de réglage pour la prise en compte du signal ( P ) de conduite de processus.

10. Système de conduite de processus suivant la revendication 8 ou 9, dont le module ( 18 ) de libération est relié du côté entrée à des capteurs prévus pour la détection de paramètres de fonctionnement, notamment d'une intensité du signal, caractéristiques de la transmission du signal entre l'interface ( 14) respective et l'unité (12) mobile de service.

11. Système de conduite de processus suivant l'une des revendications 8 à 10, dans lequel, le module ( 18) de libération détermine au moyen de la caractéristique ( O ) de localisation et au moyen de paramètres de localisation mémorisés pour le composant ( 4 ) respectif de l'installation, si le composant ( 4 ) respectif de l'installation peut être vu de l'endroit instantané où se trouve le dispositif ( 12 ) mobile de service.

12. Système de conduite de processus suivant l'une des revendications 8 à 11, dans lequel, le module ( 18 ) de libération prend pour base, comme caractéristique ( O ) de localisation, une caractéristique de position caractérisant l'interface ( 14 ) par laquelle instantanément la transmission des signaux ( P) de conduite de processus au dispositif ( 6 ) central de commande s'effectue exclusivement.

13. Système de conduite de processus suivant l'une des revendications 8 à 12, dont le module ( 18 ) de libération est relié du côté entrée à des appareils de mesure du temps pour la détection respectivement d'une durée caractéristique de transmission du signal entre l'interface ( 14 ) respective et le dispositif ( 12 ) mobile de service.

14. Système de conduite de processus suivant l'une des revendications 8 à 13, dont les interfaces ( 14 ) sont conçues pour une transmission sans fil et multicanal du signal au dispositif ( 12 ) mobile de service, le module ( 18 ) de libération étant relié du côté entrée à des capteurs prévus pour la détection de paramètres de fonctionnement caractéristiques des propriétés de transmission entre l'interface ( 14 ) respective et le dispositif ( 12 ) mobile de service, parallèlement à un signal de transmission pour le canal de contrôle établi pour les signaux ( P ) de conduite du processus.
